# EUROPEAN PATENT APPLICATION

(11) **EP 3 002 468 A1**
(43) Date of publication of application: **06.04.2016**
(21) Application number: 14187562.5
(22) Date of filing: 02.10.2014
(51) Int. Cl.: F16B 25/10, F16B 35/06, F16B 25/00

(54) **Self-drilling screw**

(71) Applicant: Schencho Industrial Co., Ltd, Pingtung City 900, Pingtung County (TW); Chen, Ming-Hsin, Kaohsiung City 820 (TW)
(72) Inventor: Huang, Kuan-Jen, Pingtung City 900, Pingtung County (TW); Chen, Chun-Fu, Pingtung City 900, Pingtung County (TW); Chen, Ming-Hsin, Kaohsiung City 820 (TW)
(74) Representative: Wynne-Jones, Laine and James LLP

(57) **Abstract**

A self-drilling screw (3) includes a head (31), a body (32) having a top end connected to the head (31), a drill tip (33) formed on a bottom end of the body (32), and a thread unit (34) formed on an outer surface of the body (32). The head (31) has a head portion (311), a neck portion (312) extending downwardly from the head portion (311), multiple helical suppressing blades (313) and multiple cutting blades (314). The suppressing blades (313) extend from a bottom side of the head portion (311) and are connected to the neck portion (312) for cutting debris (41) of a substrate (4) when the self-drilling screw (3) is drilled into the substrate (4). The cutting blades (314) protrude from the bottom side of the head portion (311) and are arranged alternately with the suppressing blades (313) for further cutting the debris (41) of the substrate (4).

## Description

The invention relates to a screw, more particularly to a self-drilling screw.

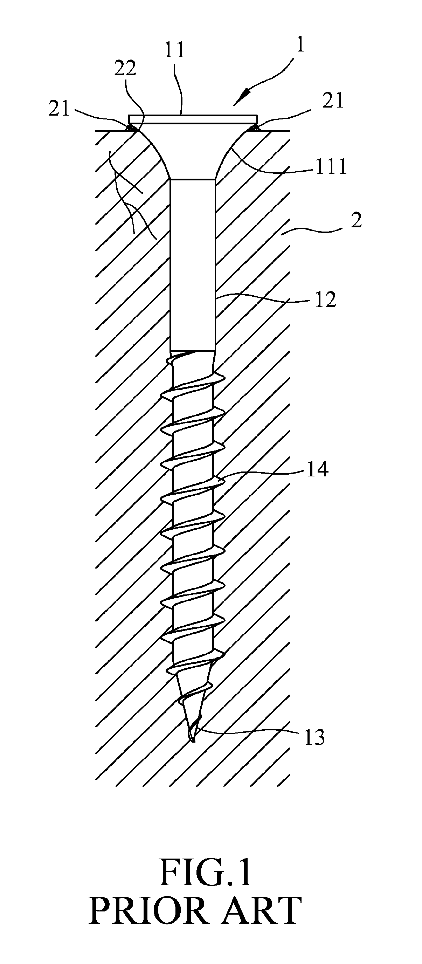

A conventional self-drilling screw 1, as shown in Fig. 1, usually includes a head 11, a body 12, a drill tip 13, and a thread 14 that is helically formed on an outer surface of the body 12. A bottom portion of the head 11 is formed with a tapered neck portion 111 that is connected to one of two opposite ends of the body 12, whereas the drill tip 13 is connected to the other end of the body 12. When the conventional self-drilling screw 1 is used on timber 2, a driving tool (not shown) is sleeved on the head 11 to drive the conventional self-drilling screw 1 into the timber 2.

Since the debris 21 generated during the drilling motion has a long strip shape, and is pushed toward the head 11 of the conventional self-drilling screw 1 due to rotation of the thread 14, the debris 21 tends to accumulate around a drilled opening 22 formed in the timber 2. As the head 11 is driven toward the timber 2, the accumulated debris 21 turns dense and is tightly pressed against the head 11, which prevents the head 11 from becoming fully flush with the surface of the timber 2, resulting in a noticeable protrusion which may cause injuries. At this moment, if the drilling process continues, the accumulated debris 21 will be forced to press against and thrust into an area surrounding the drilled opening 22, leading to cracking of the timber 2. Overall, aside from safety concerns, the exposed debris 21, the protruding head 11 and the cracking all affect the aesthetic appearance of the drilled/fastened timber 2.

Therefore, the object of the present invention is to provide a self-drilling screw that can eliminate at least one of the aforesaid drawbacks of the prior art.

According to the present invention, there is provided a self-drilling screw including a head, a body, a drill tip and a head unit. The head has a head portion, a neck portion, a plurality of helical suppressing blades and a plurality of cutting blades. The neck portion extends downwardly from the head portion, and has a downward tapering shape. The suppressing blades extend from a bottom side of the head portion, are connected to the neck portion, and are disposed for cutting debris of a substrate when the self-drilling screw is drilled into the substrate. The cutting blades protrude from the bottom side of the head portion, are arranged alternately with the suppressing blades, and are disposed for further cutting the debris of the substrate which has been cut by the suppressing blades. The body has a top end connected to the head. The drill tip is formed on a bottom end of the body. The thread unit is formed on an outer surface of the body.

Other features and advantages of the present invention will become apparent in the following detailed description of the embodiment with reference to the accompanying drawings, of which:
Fig. 1 is a perspective view of a conventional self-drilling screw;
Fig. 2 is a perspective view of an embodiment of a self-drilling screw according to the present invention;
Fig. 3 is a bottom view of the embodiment;
Fig. 4 is a fragmented view for illustrating one configuration of the cutting blades of the self-drilling screw of the embodiment;
Fig. 5 is a fragmented view for illustrating another configuration of the cutting blades of the embodiment;
Fig. 6 is a fragmented view for illustrating yet another configuration of the cutting blades of the embodiment; and
Fig. 7 is a perspective view of the embodiment when drilled into a substrate.

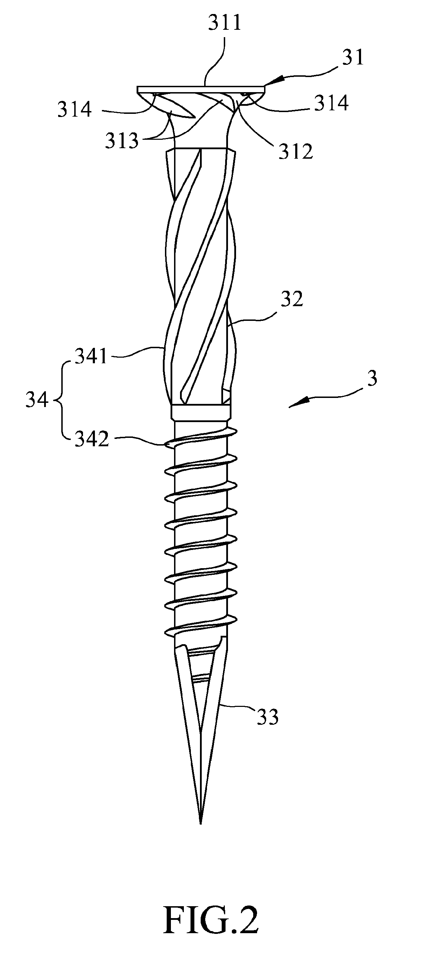

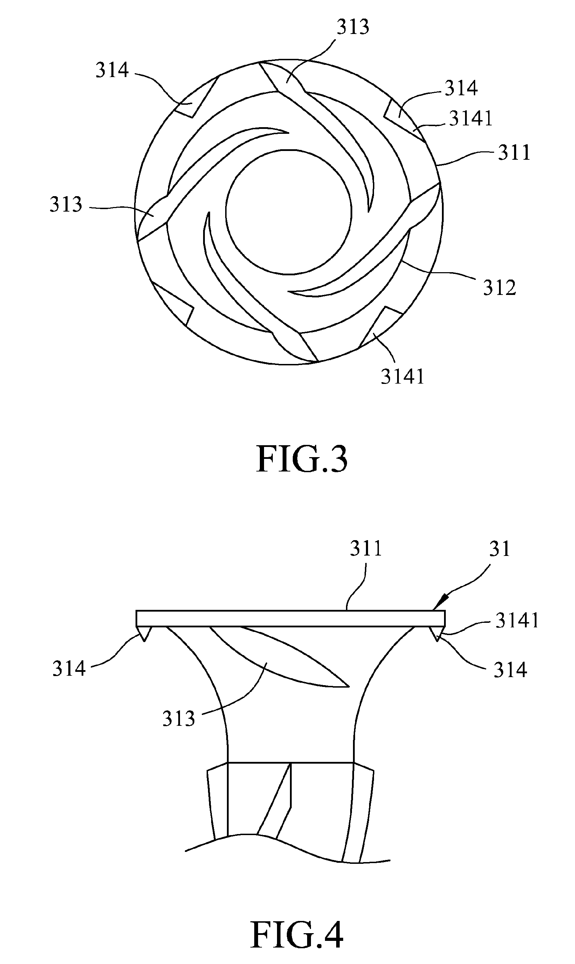

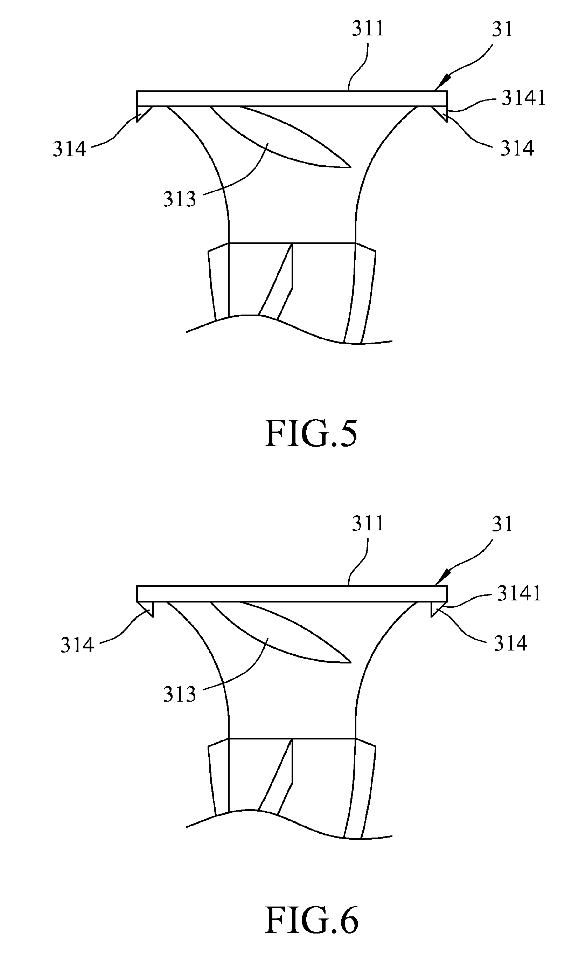

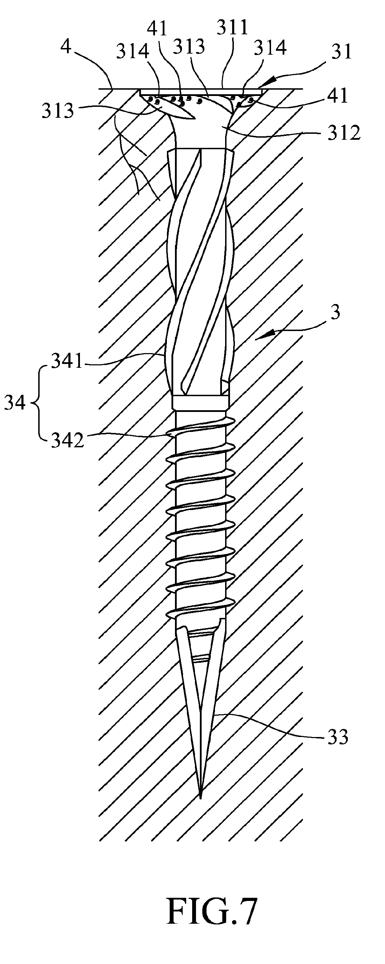

Referring to Figs. 2 and 3, an embodiment of a self-drilling screw 3 according to the present invention includes a head 31, a body 32, a drill tip 33 and a thread unit 34. The head 31 has a head portion 311, a neck portion 312, a plurality of helical suppressing blades 313 and a plurality of cutting blades 314. The neck portion 312 extends downwardly from the head portion 311 and has a downward tapering shape. The suppressing blades 313 extend from a bottom side of the head portion 311, are connected to the neck portion 312, and are disposed for cutting debris 41 of a substrate 4 (see Fig. 7) when the self-drilling screw 3 is drilled into the substrate 4. The cutting blades 314 protrude from the bottom side of the head portion 311, are arranged alternately with the suppressing blades 313, and are disposed for further cutting the debris 41 of the substrate 4 which has been cut by the suppressing blades 313. In this embodiment, the substrate 4 is timber, and an angle between an outer surface 3141 of each of the cutting blades 314 and the bottom side of the head portion 311 is smaller than or equals 90 degrees, as shown in various implementations of the embodiment in Figs. 4 to 6.

With reference to Fig. 2, the body 32 has a top end connected to the head 31, and a bottom end opposite to the top end and connected to the drill tip 33. The thread unit 34 is formed on an outer surface of the body 32, and has a first thread section 341, and a second thread section 342. There may be only one thread section in other embodiments.

Referring to Fig. 7 with reference to Fig. 3, to drive the self-drilling screw 3 into the substrate 4, the drill tip 33 is placed against the surface of the substrate 4, and a driving tool (not shown) is connected to the head portion 311 of the self-drilling screw 3. Next, the self-drilling screw 3 is driven by the driving tool to drill into the substrate 4 due to provision of the first and second thread sections 341, 342 of the thread unit 34, causing long strip shaped debris to form. When the suppressing blades 313 of the neck portion 312 of the self-drilling screw 3 come in contact with the substrate 4, the suppressing blades 313 will cut the debris. The resulting shortened debris is subsequently re-cut by the cutting blades 314 of the head portion 311 for further length reduction. While the debris 41 is being reduced in size and gradually squeezed by the head portion 311 at an outer periphery of the neck portion 312 into the substrate 4, the self-drilling screw 3 can continue to be easily drilled into the substrate 4 without the substrate 4 cracking, until the head portion 311 is flush with the surface of the substrate 4. As a result, the substrate 4 retains its evenness and aesthetic appearance, and injuries can be prevented.

In sum, due to the structural design of the present invention, such as with the provision of the suppressing blades 313 and the cutting blades 314, debris 41 is cut into substantially smaller pieces and squeezed by the head portion 311 at the outer periphery of the neck portion 312 as the self-drilling screw 3 continues drilling into the substrate 4, so as to allow the head portion 311 to be substantially flush with the surface of the substrate 4. This allows the substrate 4 to maintain its evenness and aesthetic appearance while preventing possible injuries from people bumping into the protruding head 31. In addition, by squeezing the debris 41 at the outer periphery of the neck portion 312 of the head 31, the stability of the self-drilling screw 3 is enhanced. Therefore, the purpose of this invention is served.

While the present invention has been described in connection with what is considered the most practical embodiment, it is understood that this invention is not limited to the disclosed embodiment but is intended to cover various arrangements included within the spirit and scope of the broadest interpretation so as to encompass all such modifications and equivalent arrangements.

## Claims

1. A self-drilling screw (3) **characterized by**:
a head (31) having
a head portion (311),
a neck portion (312) that extends downwardly from said head portion (311) and that has a downward tapering shape,
a plurality of helical suppressing blades (313) that extend from a bottom side of said head portion (311), that are connected to said neck portion (312), and that are disposed for cutting debris (41) of a substrate (4) when said self-drilling screw (3) is drilled into the substrate (4), and
a plurality of cutting blades (314) that protrude from said bottom side of said head portion (311), that are arranged alternately with said suppressing blades (313), and that are disposed for further cutting the debris (41) of the substrate (4) which has been cut by said suppressing blades (313);
a body (32) having a top end connected to said head (31);
a drill tip (33) formed on a bottom end of said body (32); and
a thread unit (34) formed on an outer surface of said body (32).

2. The self-drilling screw (3) as claimed in Claim 1, **characterized in that** an angle between an outer surface (3141) of each of said cutting blades (314) and said bottom side of said head portion (311) is smaller than or equals 90 degrees.
